# EUROPEAN PATENT SPECIFICATION

(11) **EP 2 763 485 B1**
(45) Date of publication and mention of the grant of the patent: **28.07.2021**
(21) Application number: 14164243.9
(22) Date of filing: 28.03.2012
(51) Int. Cl.: H04W 72/10

(54) **Scheduling method in a mobile telecommunication system**
Planungsverfahren in einem mobilen Telekommunikationssystem
Procédé de planifications dans un système de télécommunications mobile

(43) Date of publication of application: 06.08.2014
(62) Divisional of application: 12161933.2
(73) Proprietor: Telefónica Germany GmbH & Co. OHG, 80992 München (DE)
(72) Inventor: Müllner, Robert, 81479 München (DE)
(74) Representative: Herrmann, Uwe

(56) References cited:
- EP-A1- 1 771 023
- EP-A2- 2 190 249
- US-A1- 2008 215 409
- US-A1- 2008 279 139
- None

## Description

The invention is directed to a method for scheduling radio resources for packet switched services among a plurality of users in a mobile communication system.

Legislatory requirements require mobile network operators to prioritise calls made by certain privileged users such as police, emergency services and others. The aim is to enable these privileged users to perform their duties and services even in case of a severe emergency, disaster or war by giving these privileged users preferential access to the mobile network resources. In case of severe emergency disaster or war, the mobile network may be overloaded, and ordinary users may not be able to successfully establish calls due to radio access network congestion.

For fulfilling these requirements for circuit switched (CS) speech services, government bodies and authorities use enhanced Multi-Level Precedence and Pre-emption (eMLPP) for preferred access rights in congested networks during emergency situations. These access classes are standardised for CS services and pre-emption is applied for CS speech and CS data services. As most of the data traffic in mobile networks is packet switched (PS) traffic, prioritisation in terms of access rights is desired also for packet data services. Moreover, privileged users want to use enhanced calling features, such as video calls or exchange multimedia information.

For instance, in US 2008/279139 A1 a method for managing radio resources allocated by a radio network controller is disclosed, however, said method is exclusively applied within the packet switched domain. Further methods are know from EP 1 771 023 A1, EP 2 190 249 A2 and US 2008/215409 A1. EP 1 771 023 A1 suggests using the Allocation Retention Priority in order to reduce resource allocation to such an extent until congestion is dissolved. EP 2 190 249 A2 discloses another method for obtaining QoS differentiation in RAN sharing. From US 2008/215409 A1 a method for priority planning is known.

The aim of this invention is to provide options for handling privileged treatment of specific user groups in the packet switched domain.

Different prioritisation schemes are applied in communication networks based on differentiation between user groups, service types or capabilities of the equipment. In the 3rd Generation Partnership Project (3GPP) standard, eMLPP was introduced for CS services to assign preferred access rights to specific users. Different access classes are administered in the Home Location Register (HLR). At call setup the access class of the user is conveyed from the core network to the radio network. High priority users have pre-emptive access rights over standard users and in case of congestion, a connection of a standard user might be terminated to provide resources for allocating the call of a privileged user. This functionality is standardised and restricted to CS speech and CS data services.

CS data services are rarely used in mobile networks due to their bursty nature and non-economic allocation of physical resources. PS data services are widespread in use in mobile networks in the General Packet Radio Service (GPRS), Enhanced GPRS (E-GPRS), Universal Mobile Telecommunications System (UMTS) and High Speed Packet Access (HSPA). Moreover, the 3GPP standard for Long Term Evolution (LTE) is explicitly based on PS services for speech and data.

It is the object of the present invention to enable a privileged treatment of packet switched data service for a particular group of users.

This object is solved by the subject matter of independent claim 1 and claim 13. Preferred embodiments are defined by the dependent claims.

According to a further aspect of the present invention, CS user specific attributes are used in combination with PS service specific attributes to define access rights. According to the present invention a combination of service related and user related QoS attributes is used for defining a scheduling priority. User specific parameters have higher priority than service specific QoS parameters, i.e. a low priority service performed by a high priority user obtains higher scheduling priority than a high priority service of a low priority user.

According to a further aspect of the present invention PS and CS service and user specific parameters are used in combination with a threshold based procedure to switch between soft and hard pre-emption for the allocation of high priority data users in a congested mobile network cell.

According to yet a further aspect of the present invention PS and CS service and user specific parameters are used in combination with a threshold based procedure to automatically detect severe emergency situation.

According to a further aspect of the present invention PS and CS service and user specific parameters are used for admission control, downstream pre-emption and scheduling priority on the air interface and terrestrial interfaces.

### Detailed description of the invention

In the following, the term "user" refers -but is not limited to - a user using a user equipment and identified by an identity module, such as an SIM or UICC. Moreover, the term "privileged" or "priority user" refers to a user identified by an identity module that is provisioned (e.g. in an HLR) as belonging to the group of privileged users (such as police or emergency services). Likewise, the term "standard user" refers to a user identified by an identity module that is provisioned as belonging to the group of standard users such as regular subscribers of a public land mobile network (PLMN).

In the PS domain Quality of Service (QoS) attributes are introduced to differentiate services according to their requirements. The associated QoS profile is conveyed from the mobile terminal to the Serving GPRS Support Node (SGSN) and its assignment is negotiated. Examples for service related QoS attributes are Traffic Class (TC) and Traffic Handling Priority (THP) for interactive services. The user related QoS attribute Allocation/Retention Priority (ARP) is administered in the HLR. The Radio Access Bearer (RAB) assignment request sent in third generation (3G) networks from the SGSN to the RNC includes one of the three values specified for ARP value, which is mapped on one of the 15 priority levels used by the Radio Network Controller (RNC) for packet scheduling over the air interface. A similar procedure is applied by the Packet Control Unit (PCU) in Second Generation (2G) networks.

Prioritisation of users based on the capabilities of their terminals can be used e.g. to prioritise multi Radio Access Technology (RAT) terminal users in a given RAT.

The invention is explicated by means of the following figures:

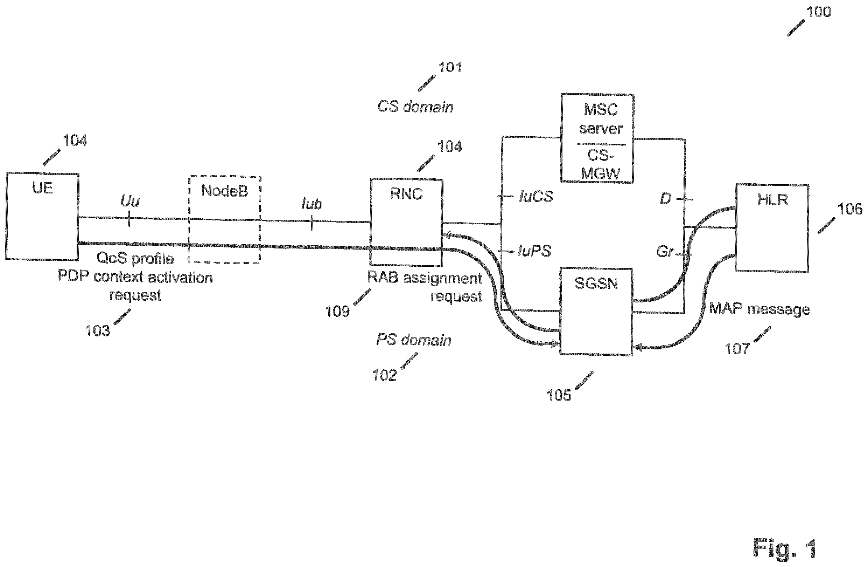

Figure 1 shows a part of the 3G network architecture (100) and its differentiation between the PS (102) and CS (101) domain. For consideration of QoS attributes for resource assignment service related parameters are sent in the PDP context activation request (103) from the User Equipment (UE) (104) to the SGSN (105). The user specific parameter ARP is transferred from the HLR (106) to the SGSN via a MAP message (107). The SGSN informs the RNC (108) about the QoS parameters in the RAB assignment request (109).

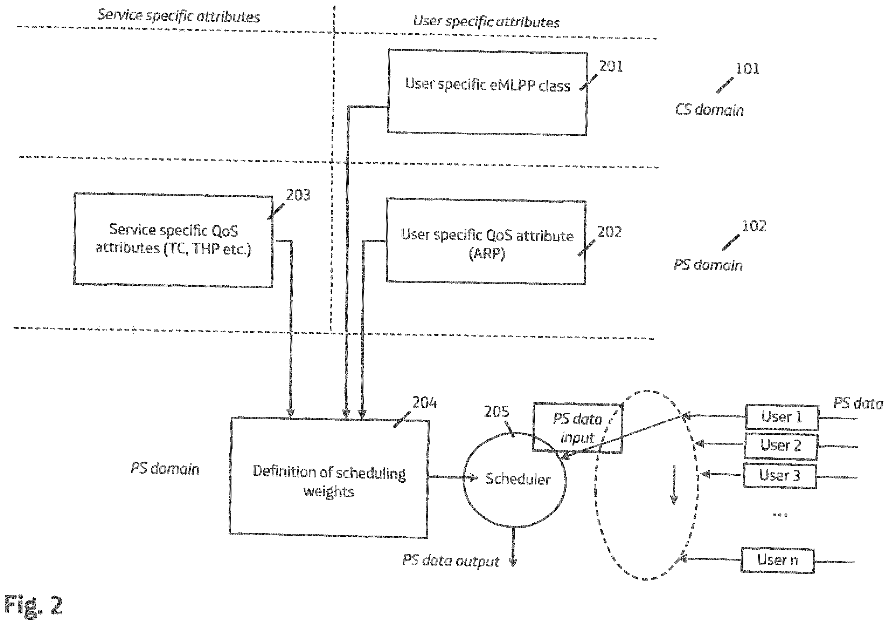

Figure 2 shows how service specific QoS attributes (203) and user specific attributes (201, 202) from PS (102) and CS (101) domain are used to define the scheduling weight (204) in the PS domain. The scheduling weight for each user is used by the scheduler (205) to decide how often a particular user is scheduled or how long a particular user receives service in the PS domain.

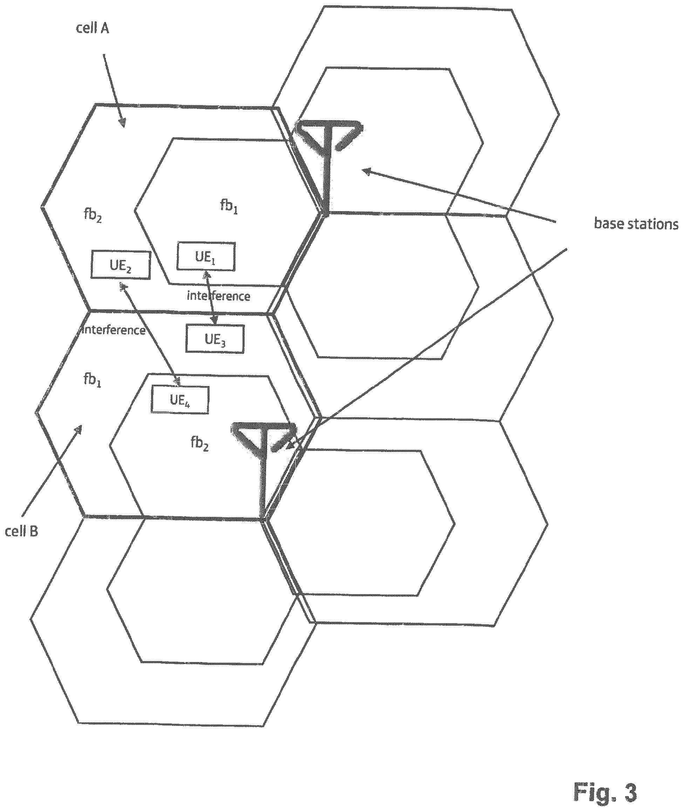

Figure 3 shows a standard ICIC configuration. The frequency range of each cell (cell A, cell B) is sub-divided into two frequency bands (fb1 and fb2). In cell A, fb1 is assigned to UEs in the vicinity of the base station, while fb2 is assigned to UEs at the cell border. In the neighbouring cell B, fb1 is used by UEs at the cell border, while fb2 is assigned to UEs in the inner area of the cell. Thus direct interference between mobiles at the cell border of cell A and cell B is avoided. Nevertheless, interference between UEs in the inner area of cell A (UE1) and the outer area of cell B (UE3) exists.

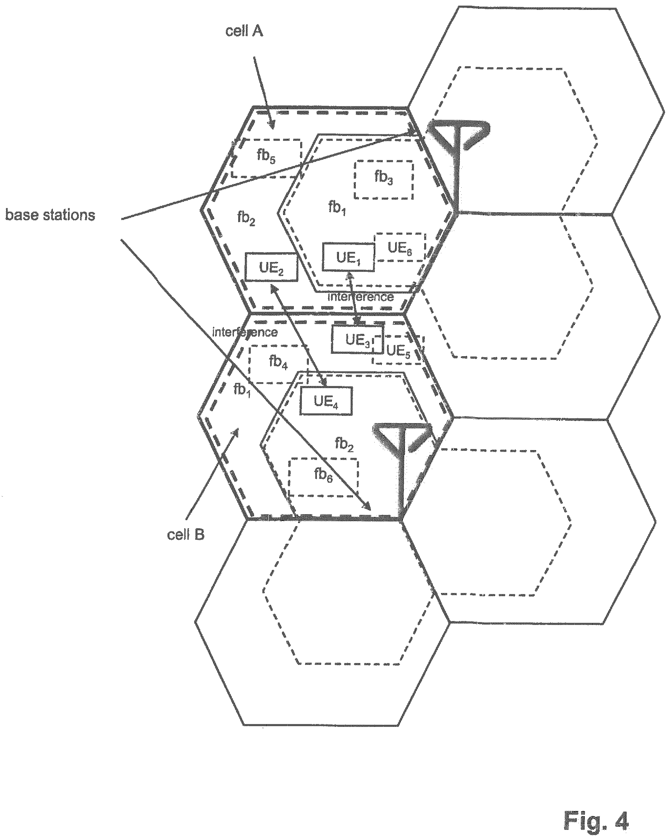

Figure 4 shows the frequency band separation according to an aspect of the present invention. In particular, in cell A, fb1 and fb3 are assigned to UEs in the inner area, where fb1 is used by standard UEs and fb3 is used by UEs of prioritised users. The outer area of cell A uses frequency bands fb2 for standard UEs and fb5 for priority users. In cell B, fb2 in the inner area is assigned to standard users and fb6 to high priority users (dashed line). In the outer area of cell B, fb1 is assigned to standard users and fb4 to high priority users. Thus interference between standard users (UE1 and UE3) still exists, but not between the privileged users with UEs 5 and 6 (dashed lines) using the frequency bands fb4 (UE5) and fb3 (UE6).

The range of the sub-bands fb1 to fbn shall be adapted dynamically based on the number of high priority users. In case of serving only few high priority users, fb1 in the inner area of cell A shall be larger than fb3. As the number of high priority users increases, frequencies from fb1 shall be transferred to fb3. As a consequence of lower interference, higher modulation and coding schemes can be used and the retransmission rate can be lowered. Both aspects contribute to an increase of throughput of a packet switched data service.

### Privileged treatment of packet data service users based on QoS attributes

In 3G networks the QoS profile including QoS attributes such as TC and THP is sent in the Packet Data Protocol (PDP) context activation request from the UE to the SGSN. The subsequent step includes communication between SGSN and HLR to verify whether the QoS requirements requested by the UE are permitted. The ARP is a subscription parameter administered in the HLR and is sent via a Mobile Application Part (MAP) message from the HLR to the SGSN. The QoS requirements including TC, THP and ARP are finally transferred from the SGSN to the RNC in the RAB assignment request as shown in Figure 1.

According to the current state of technology, these parameters are combined via weighting factors and mapped on a single value that defines the weight of a user specific data stream. In a multi-user system the scheduler decides in which sequence data from different users are transmitted over the air interface (Uu). An important aspect is the frequency for scheduling data of a specific user compared to other users. This scheduling policy allows prioritising data of specific services and/or users according to their QoS requirements by using polling models. In these polling models typically a single server visits a number of queues in a predefined order. After visiting a particular queue, other queues are served according to a scheduling strategy: A model characterises The visiting order of the server to the queues and the strategy being used to decide how long a specific queue is visited to transmit data before the server leaves.

According to an aspect of the invention the QoS attribute ARP shall be used for admission control, pre-emption and scheduling priority.

### Admission control and pre-emption

Admission shall be granted to users of high priority. In case of congestion, PS services of users with lower ARP shall be pre-empted and service requests of low priority users, i.e. users with higher ARP shall rejected.

There are two operating modes for pre-emption:
In soft pre-emption existing PS services of standard users shall be maintained but their scheduling weight shall be reduced to allocate new service requests of high priority users on the free resources, i.e. the PS service of a standard user is downgraded.

Hard pre-emption is a mechanism to terminate existing services of standard users to immediately provide physical resources for high priority users.

A threshold is introduced to decide on switching between soft and hard pre-emption. If the number of assigned resources for high priority users is below this threshold and high priority users are served according to their QoS requirements, soft pre-emption shall be applied. If the number of assigned resources for high priority users exceeds this threshold or the QoS requirements of high-priority users are not fulfilled, hard pre-emption is activated and existing PS services will be terminated. A hysteresis shall be introduced to reduce the number of switches between soft and hard pre-emption.

In all these procedures the priority of the user shall be based on the value of the ARP.

### Scheduling priority

The QoS priorities of high priority users shall be analysed. If necessary, services of users of lower priority shall be downgraded to provide sufficient resources for fulfilling the QoS requirements of high priority users, e.g. the guaranteed bit rate for real-time services (TC = 1 and TC = 2). For this purpose the attribute ARP shall obtain a sufficiently high weight in the mapping of service-related QoS attributes (TC, THP etc.) and user-related QoS attribute ARP on the overall scheduling weight. For fulfilling QoS requirements of high priority users, the weight of the user specific QoS parameter (ARP) shall dynamically be increased and the weight of service specific QoS parameters (e.g. TC and THP) shall be decreased such that highest priority for scheduling decisions is assigned to the user group.

The overall scheduling weight of a service shall be defined by mapping each used QoS parameter on a scale from 0 to 1, to so-called Assigned QoS Values, and multiplying service specific Assigned QoS Values with a weighting factor for service specific QoS attributes. User specific Assigned QoS Values shall be multiplied with a weighting factor for user specific QoS attributes.

The resulting value shall be scaled on a value between 0 and 1 by division by the number of used QoS attributes. The sum of both weighting factors, user specific and service specific, shall be 1.

For 2G systems the same QoS attributes are used and the value of the ARP shall be used by the Packet Control Unit (PCU) to assign higher priority to privileged data service users in terms of access rights and scheduling priority. In LTE prioritisation of users based on the ARP attribute shall be applied by the evolved NodeB (eNodeB).

### Privileged treatment of packet data service users based on eMLPP levels

The eMLPP priority class administered in the HLR and according to the current state of technology only used for CS services, shall be conveyed to the PCU (2G), RNC (3G) or eNodeB (LTE). The eMLPP class shall be used to define the user specific part for the definition of the scheduling weight. The scheduling weight shall be calculated by a combination of user and service specific attributes as described in 6.3.2.1.2. The important aspect is that not only PS based attributes are used, but also CS attributes. This combination of PS and CS domain is shown in Figure 2. The calculated relative scheduling weight for each served user shall be used by the scheduler to decide how long a particular user receives service.

Admission control, pre-emption and scheduling of users of lower priority shall be performed as described in the previous sections. The difference is the use of eMLPP classes from the CS domain for defining the user priority. The advantage of this solution is that only one data base has to be administered, i.e. the eMLPP class definition in the CS domain. Consistency between CS and PS data in the HLR is not required. This aspect reduces the effort for handling privileged treatment of specific user groups. A further advantage is that the three classes defined for ARP in 3GPP TS 23.107 can be used for differentiation of users independent of government bodies and authorities, the latter group is administered via the eMLPP classes.

User specific information of the CS domain shall be sent from the HLR (via the SGSN) to the RNC and shall be used for scheduling decisions by transferring user-specific eMLPP classes to the SGSN and RNC and used for PS service assignment.

### Automatic detection of severe emergency situations

For governmental bodies and authorities it is essential that preferred access rights are assigned automatically without operator intervention. The priority classes are configured fixed, i.e. a prioritised user obtains permanently preferred access rights. This is not desired if the user uses the mobile phone in non-emergency situations. To differentiate between emergency and non-emergency situations, a threshold shall be introduced to switch between soft and hard pre-emption. If the number of priority users in a cell is below this threshold, soft pre-emption shall be applied, i.e. the priority user obtains access to the packet data network, but serving of standard users is also permitted. If the number of priority users in the cells exceeds this threshold, hard pre-emption shall be applied to keep the resources free for priority users.

### Coordination with interference reduction features

To increase the throughput for priority users, Inter Cell Interference Coordination (ICIC) technologies as used in LTE shall be applied in combination with user specific QoS attributes. In ICIC the frequency spectrum is separated and it is avoided that cell edge users in one cell use the same frequencies as cell edge users of the neighbouring cell. This procedure reduces interference which is important in frequency re-use 1 networks, which is the typical deployment scenario for LTE networks.

Prioritised users shall be allocated in specific frequency groups to avoid throughput reduction from interference. A specific frequency spectrum shall be assigned to priority users irrespectively of their location at the cell border or in the vicinity of the base station. Thresholds shall be used to decide how many frequencies are assigned to this specific group, depending on the number of priority users in the cell.

### Network technologies

The procedures described in the preceding sections can be applied in 2G, 3G and LTE networks. Furthermore in LTE networks, priority handling shall also be used for speech services, which is performed in LTE in the PS domain.

### Application on air interface and interfaces between network entities

The described procedure shall be applied on the air interface but also on the terrestrial interface between different network nodes.

### Pre-emption of speech services for allocation of services of privileged data users

If sufficient resources are not available to serve privileged packet data users, not only PS services of standard users shall be downgraded or pre-empted, but also CS services shall be terminated to save resources.

## Claims

1. A method for scheduling radio resources for packet switched services among a plurality of users in a mobile communication system, the method being performed by a scheduler at either a Packet Control Unit, PCU, a Radio Network Controller, RNC, or an evolved NodeB, eNodeB, and comprising the steps of: determining user and/or service attributes of the packet-switched, PS, and circuit-switched, CS, domain by receiving service specific Quality of Service, QoS, attributes from a User Equipment, UE, or from the Serving GPRS Support Node, SGSN, and user specific QoS attributes as Allocation/Retention Priority, ARP, administered in an HLR of the mobile communication system as well as user specific enhanced Multi-Level Precedence and Pre-emption, eMLPP, classes from the HLR; wherein the eMLPP classes define the user specific attributes in the CS domain for the definition of a scheduling weight, and taking a resource allocation or scheduling decision on basis of these determined attributes wherein a combination of packet switched and circuit switched service and user specific attributes is used for the calculation of the scheduling weight for each served user such that high priority users of packet switched services pre-empt circuit switched services of lower priority users wherein the scheduling weight is used by the scheduler to decide how often a particular user is scheduled or how long a particular user receives services in the PS domain.

2. The method according to claim 1 wherein scheduling is achieved by either soft or hard pre-emption and wherein in particular a threshold is introduced to decide on switching between hard and soft pre-emption.

3. The method according to claim 2 wherein packet switched and circuit switched service and user specific attributes are used in combination with a threshold based procedure to switch between soft and hard pre-emption for the allocation of high priority data users in a congested mobile network cell.

4. The method according to any one of the preceding claims 2 to 3 wherein a hysteresis is introduced to reduce the number of switches between soft and hard pre-emption.

5. The method according to any one of the preceding claims 2 to 4 wherein soft pre-emption comprises downgrading circuit switched services for standard users if sufficient resources are not available to serve high priority packet switched users.

6. The method according to any one of the preceding claims 2 to 5 wherein hard pre-emption comprises terminating and/or rejecting circuit switched services for standard users if sufficient resources are not available to serve high priority packet switched users.

7. The method according to any one of the preceding claims 2 to 6 wherein soft pre-emption comprises downgrading packet switched services for standard users if sufficient resources are not available to serve high priority packet switched users.

8. The method according to any one of the preceding claims 2 to 7 wherein hard pre-emption comprises terminating and/or rejecting packet switched services for standard users if sufficient resources are not available to serve high priority packet switched users.

9. The method according to any of preceding claims 2 to 8 wherein the packet and circuit switched service and user specific attributes are used in combination with a threshold based procedure to automatically detect severe emergency situations.

10. The method according to any one of the preceding claims wherein the user specific attributes comprise priority classes as the eMLPP priority class, and a priority value as the Allocation/Retention Priority, ARP, wherein the ARP being multiplied with weighting factors.

11. The method according to any one of the preceding claims wherein the service attributes include quality of service, QoS, attributes as traffic class, TC, or traffic handling priority, THP, wherein the service attributes are being multiplied by a weighting factor.

12. The method according to one of the claims 10 or 11 wherein the weighting factor ranges between 0 and 1 and/or the sum of all weighting factors equals 1.

13. A mobile communication system comprising at least one user equipment, at least one of a Packet Control Unit, PCU, a Radio Network Controller, RNC, or an evolved NodeB, eNodeB, and a scheduler adapted to perform the method according to one of the claims 1 to 12 at either the Packet Control Unit, PCU, the Radio Network Controller, RNC, or the evolved NodeB, eNodeB.

## Patentansprüche

1. Verfahren zum Scheduling von Funkressourcen für paketvermittelte Dienste bei mehreren Nutzern in einem mobilen Kommunikationssystem, wobei das Verfahren von einem Scheduler entweder an einer Paketsteuereinheit (Packet Control Unit), PCU, einem Funknetz-Controller, RNC, oder einer Evolved Node, eNodeB, ausgeführt wird und die folgenden Schritte umfasst:
Ermitteln von Nutzer- und/oder Dienstattributen der paketvermittelten, PS, und leitungsvermittelten, CS, Domäne durch Empfangen von dienstspezifischen Dienstqualität-Attributen (QoS-Attributen) von einem Endgerät, UE, oder von dem Serving GPRS Support Node, SGSN, und nutzerspezifischen QoS-Attributen a: Zuweisungs-/Speicher-Priorität (Allocation/Retention Priority), ARP, die in einem HLR des mobilen Kommunikationssystems verwaltet werden, sowie nutzerspezifische verbesserte Rangordnungs- und Bevorrechtigungsklassen (Enhanced Multi-Level Precedence and Pre-emption Classes), eMLPP-Klassen, von dem HLR; wobei die eMLPP-Klassen die nutzerspezifischen Attribute in der CS-Domäne für die Definition eines Scheduling-Gewichts definieren, und
Fällen einer Ressourcenzuweisungs- oder Scheduling-Entscheidung aufgrund dieser ermittelten Attribute, wobei eine Kombination aus paketvermittelten und leitungsvermittelten dienst- und nutzerspezifischen Attributen für die Berechnung des Scheduling-Gewichts für jeden bedienten Nutzer verwendet wird, so dass prioritätshohe Nutzer von paketvermittelten Diensten Vorgriff gegenüber leitungsvermittelten Diensten von prioritätsniedrigen Nutzern haben, wobei das Scheduling-Gewicht von dem Scheduler genutzt wird, um zu entscheiden, wie oft ein bestimmter Nutzer eingeplant wird oder wie lange ein bestimmter Nutzer Dienste in der PS-Domäne erhält.

2. Verfahren nach Anspruch 1, wobei Scheduling entweder durch weiche oder harte Bevorrechtigung erreicht wird und wobei insbesondere ein Schwellenwert eingeführt wird, um über ein Wechseln zwischen harter und weicher Bevorrechtigung zu entscheiden.

3. Verfahren nach Anspruch 2, wobei paketvermittelte und leitungsvermittelte dienst- und nutzerspezifische Attribute kombiniert mit einem schwellenwertbasierten Vorgehen genutzt werden, um zwischen weicher und harter Bevorrechtigung für die Zuweisung von prioritätshohen Datennutzern in einer überlasteten Mobilfunkzelle zu wechseln.

4. Verfahren nach einem der vorhergehenden Ansprüche 2 bis 3, wobei eine Hysterese eingeführt wird, um die Anzahl der Wechsel zwischen weicher und harter Bevorrechtigung zu reduzieren.

5. Verfahren nach einem der vorhergehenden Ansprüche 2 bis 4, wobei weiche Bevorrechtigung das Herabstufen von leitungsvermittelten Diensten für Standardnutzer umfasst, wenn nicht genügend Ressourcen zur Verfügung stehen, um prioritätshohe paketvermittelte Nutzer zu bedienen.

6. Verfahren nach einem der vorhergehenden Ansprüche 2 bis 5, wobei harte Bevorrechtigung das Beenden und/oder Verwerfen von leitungsvermittelten Diensten für Standardnutzer umfasst, wenn nicht genügend Ressourcen zur Verfügung stehen, um prioritätshohe paketvermittelte Nutzer zu bedienen.

7. Verfahren nach einem der vorhergehenden Ansprüche 2 bis 6, wobei weiche Bevorrechtigung das Herabstufen von paketvermittelten Diensten für Standardnutzer umfasst, wenn nicht genügend Ressourcen zur Verfügung stehen, um prioritätshohe paketvermittelte Nutzer zu bedienen.

8. Verfahren nach einem der vorhergehenden Ansprüche 2 bis 7, wobei harte Bevorrechtigung das Beenden und/oder Verwerfen von paketvermittelten Diensten für Standardnutzer umfasst, wenn nicht genügend Ressourcen zur Verfügung stehen, um prioritätshohe paketvermittelte Nutzer zu bedienen.

9. Verfahren nach einem der vorhergehenden Ansprüche 2 bis 8, wobei die paket- und leitungsvermittelten dienst- und nutzerspezifischen Attribute kombiniert mit einem schwellenwertbasierten Vorgehen genutzt werden, um automatisch schwere Notfallsituationen zu erkennen.

10. Verfahren nach einem der vorhergehenden Ansprüche, wobei die nutzerspezifischen Attribute Prioritätsklassen als eMLPP-Prioritätsklasse und einen Prioritätswert als Allocation/Retention Priority, ARP, umfassen, wobei die ARP mit Gewichtungsfaktoren multipliziert wird.

11. Verfahren nach einem der vorhergehenden Ansprüche, wobei die Dienstattribute Dienstqualität-Attribute, QoS-Attribute, als Verkehrsklasse, TC, oder Prioritätsbehandlung von Verkehr, THP, umfassen, wobei die Dienstattribute mit einem Gewichtungsfaktor multipliziert werden.

12. Verfahren nach einem der Ansprüche 10 oder 11, wobei der Gewichtungsfaktor von 0 bis 1 reicht und/oder die Summe aller Gewichtungsfaktoren gleich 1 ist.

13. Mobiles Kommunikationssystem mit mindestens einem Endgerät, mindestens einer Paketsteuereinheit, PCU, einem Funknetz-Controller, RNC, oder einem Evolved NodeB, eNodeB, und einem Scheduler, der ausgelegt ist, um das Verfahren nach einem der Ansprüche 1 bis 12 entweder an der Paketsteuereinheit, PCU, dem Funknetz-Controller, RNC, oder dem Evolved NodeB, eNodeB, auszuführen.

## Revendications

1. Procédé de planification de ressources radio pour des services à commutation de paquets parmi une pluralité d'utilisateurs dans un système de communication mobile, le procédé étant exécuté par un planificateur sur une unité de contrôle de paquets, PCU (Packet Control Unit), un contrôleur de réseau de radiocommunication, RNC (Radio Network Controller), ou un nœud B évolué, eNodeB (evolved NodeB), et comprenant les étapes consistant à :
déterminer des attributs d'utilisateur et/ou de service du domaine à commutation de paquets, PS (Packet Switched), et à commutation de circuits, CS (Circuit Switched), en recevant des attributs de qualité de service, QoS (Quality of Service), spécifiques du service provenant d'un équipement utilisateur, UE (User Equipment), ou du nœud support actif GPRS, SGSN (Serving GPRS Support Node), et des attributs de QoS spécifiques de l'utilisateur sous la forme d'une priorité d'allocation-rétention, ARP (Allocation/Retention Priority), administrée dans un HLR du système de communication mobile ainsi que des catégories de service évolué de préséance et de préemption à plusieurs niveaux, eMLPP (enhanced Multi-Level Precedence and Pre-emption), spécifiques de l'utilisateur provenant du HLR ; les catégories eMLPP définissant les attributs spécifiques de l'utilisateur dans le domaine CS pour la définition d'un poids de planification, et
prendre une décision d'allocation ou de planification de ressource sur la base de ces attributs déterminés, une combinaison de service à commutation de paquets et à commutation de circuits et d'attributs spécifiques de l'utilisateur étant utilisée pour le calcul du poids de planification pour chaque utilisateur servi de telle sorte que des utilisateurs à haute priorité de services à commutation de paquets préemptent des services à commutation de circuits d'utilisateurs à priorité moins élevée, le poids de planification étant utilisé par le planificateur pour décider à quelle fréquence un utilisateur particulier est planifié ou pendant combien de temps un utilisateur particulier reçoit des services dans le domaine PS.

2. Procédé selon la revendication 1, dans lequel la planification est obtenue par préemption douce ou préemption dure et dans lequel un seuil est en particulier introduit pour décider de commuter entre préemption dure et préemption douce.

3. Procédé selon la revendication 2, dans lequel le service à commutation de paquets et à commutation de circuits et des attributs spécifiques de l'utilisateur sont utilisés en combinaison avec une procédure basée sur un seuil pour commuter entre la préemption douce et la préemption dure pour l'allocation d'utilisateurs de données à haute priorité dans une cellule de réseau mobile saturée.

4. Procédé selon l'une quelconque des revendications précédentes 2 à 3, dans lequel une hystérésis est introduite pour réduire le nombre de commutations entre préemption douce et préemption dure.

5. Procédé selon l'une quelconque des revendications précédentes 2 à 4, dans lequel la préemption douce comprend la mise à un niveau inférieur de services à commutation de circuits pour des utilisateurs standard s'il n'y a pas assez de ressources disponibles pour servir les utilisateurs à commutation de paquets à haute priorité.

6. Procédé selon l'une quelconque des revendications précédentes 2 à 5, dans lequel la préemption dure comprend l'arrêt et/ou le rejet de services à commutation de circuits pour des utilisateurs standard s'il n'y a pas assez de ressources disponibles pour servir les utilisateurs à commutation de paquets à haute priorité.

7. Procédé selon l'une quelconque des revendications précédentes 2 à 6, dans lequel la préemption douce comprend la mise à un niveau inférieur de services à commutation de paquets pour des utilisateurs standard s'il n'y a pas assez de ressources disponibles pour servir les utilisateurs à commutation de paquets à haute priorité.

8. Procédé selon l'une quelconque des revendications précédentes 2 à 7, dans lequel la préemption dure comprend l'arrêt et/ou le rejet de services à commutation de paquets pour des utilisateurs standard s'il n'y a pas assez de ressources disponibles pour servir les utilisateurs à commutation de paquets à haute priorité.

9. Procédé selon l'une quelconque des revendications précédentes 2 à 8, dans lequel le service à commutation de paquets et à commutation de circuits et des attributs spécifiques de l'utilisateur sont utilisés en combinaison avec une procédure basée sur un seuil pour détecter automatiquement des situations d'extrême urgence.

10. Procédé selon l'une quelconque des revendications précédentes, dans lequel les attributs spécifiques de l'utilisateur comprennent des catégories de priorité sous la forme de la catégorie de priorité eMLPP, et une valeur de priorité sous la forme de la priorité d'allocation-rétention, ARP, l'ARP étant multipliée par des facteurs de pondération.

11. Procédé selon l'une quelconque des revendications précédentes, dans lequel les attributs de service comportent des attributs de qualité de service, QoS, sous la forme d'une classe de trafic, TC (Traffic Class), ou d'une priorité d'acheminement du trafic, THP (Traffic Handling Priority), les attributs de service étant multipliés par un facteur de pondération.

12. Procédé selon l'une quelconque des revendications 10 ou 11, dans lequel le facteur de pondération est compris entre 0 et 1 et/ou la somme de tous les facteurs de pondération est égale à 1.

13. Système de communication mobile, comprenant au moins un équipement utilisateur, au moins un élément parmi une unité de contrôle de paquets, PCU (Packet Control Unit), un contrôleur de réseau de radiocommunication, RNC (Radio Network Controller), et un nœud B évolué, eNodeB (evolved NodeB), et un planificateur adapté pour exécuter le procédé selon l'une des revendications 1 à 12 sur l'unité de contrôle de paquets, PCU, le contrôleur de réseau de radiocommunication, RNC, ou le nœud B évolué, eNodeB.
